# EUROPEAN PATENT APPLICATION

(11) **EP 4 800 984 A1**
(43) Date of publication of application: **02.09.2026**
(21) Application number: 24939880.1
(22) Date of filing: 11.11.2024
(51) Int. Cl.: H04L 12/40, B60L 58/18, H04L 69/14, B60R 16/023

(54) **DIAGNOSTIC INFORMATION COLLECTING METHOD FOR VEHICLE DIAGNOSIS AND BATTERY SYSTEM**

(30) Priority: 24.05.2024 KR 20240067809
(71) Applicant: LG Energy Solution, Ltd., Seoul 07335 (KR)
(72) Inventor: LEE, Hojoon, Daejeon 34122 (KR)
(74) Representative: Plasseraud IP
(86) International application number: PCT/KR2024/017761
(87) International publication number: WO 2025/244206

(57) **Abstract**

The present disclosure relates to a diagnostic information collecting method for vehicle diagnosis and a battery system. A method in which a master electronic control unit (ECU) collects diagnostic information for vehicle diagnosis from a plurality of slave ECUs according to an aspect of the present disclosure includes receiving a data request for the diagnostic information from a diagnostic device, determining whether a total capacity of a required buffer corresponding to a data length of diagnostic data including the diagnostic information and the number of the plurality of slave ECUs is less than a buffer size allocated for diagnosis, collecting a plurality of diagnostic data from the plurality of slave ECUs in a multi-channel or single-channel communication method based on whether the total capacity is less than the buffer size, and transmitting the plurality of diagnostic data to the diagnostic device.

## Description

### [Technical Field]

### CROSS-REFERENCE TO RELATED APPLICATION

This application claims priority to and the benefit of Korean Patent Application No. 10-2024-0067809 filed in the Korean Intellectual Property Office on May 24, 2024, the entire contents of which are incorporated herein by reference.

The present disclosure relates to a diagnostic information collecting method for vehicle diagnosis and a battery system.

### [Background Art]

Unified Diagnostic Service (UDS) communication is a communication protocol used to diagnose vehicles or collect information. According to the ISO 15765-2 standard protocol definition, UDS communication may transmit data packets via a CAN bus.

In a single ECU situation, which generally includes one ECU, a diagnostic tool may be connected to a single ECU in a single connection communication method and perform 1:1 communication. On the other hand, in a multiple connection communication situation where multiple ECUs that perform the same function for a plurality of battery packs are present, upper ECUs that receive a request from the diagnostic tool needs to request and collect information of lower ECUs, gather the information, and then send the information to the diagnostic tool.

In such a multiple connection communication situation, a single-channel communication method and a multi-channel communication method may be utilized as a method for upper ECUs to communicate with lower ECUs. However, the single-channel communication method and the multi-channel communication method each have advantages and disadvantages.

### [Disclosure]

### [Technical Problem]

The present disclosure attempts to provide a diagnostic information collecting method for vehicle diagnosis and a battery system capable of dynamically using a single-channel communication method and a multi-channel communication method according to the amount of diagnostic data in a UDS communication method between a master controller and a plurality of slave controllers when diagnosing a vehicle battery.

### [Technical Solution]

A method in which a master electronic control unit (ECU) collects diagnostic information for vehicle diagnosis from a plurality of slave ECUs according to an aspect of the present disclosure includes receiving a data request for the diagnostic information from a diagnostic device, determining whether a total capacity of a required buffer corresponding to a data length of diagnostic data including the diagnostic information and the number of the plurality of slave ECUs is less than a buffer size allocated for diagnosis, collecting a plurality of diagnostic data from the plurality of slave ECUs in a multi-channel or single-channel communication method based on whether the total capacity is less than the buffer size, and transmitting the plurality of diagnostic data to the diagnostic device.

The transmitting of the plurality of diagnostic data to the diagnostic device may include gathering contents of data in a controller area network (CAN) message received from each of the plurality of slave ECUs until receiving the diagnostic data from all of the plurality of slave ECUs.

When it is determined that the total capacity is less than the buffer size, the collecting of the plurality of diagnostic data from the plurality of slave ECUs in the multi-channel or single-channel communication method may include broadcasting a request message to the plurality of slave ECUs and, simultaneously or with a time lag, collecting the diagnostic information in the multi-channel communication method that receives the diagnostic data from each of the plurality of slave ECUs.

When it is determined that the total capacity is greater than or equal to the buffer size, the collecting of the plurality of diagnostic data from the plurality of slave ECUs in the multi-channel or single-channel communication method may include collecting the diagnostic information in the single-channel communication method that sequentially performs operations of transmitting a request message and receiving the diagnostic data, for each of the plurality of slave ECUs.

The method may further include transmitting a message to pend a response to the data request to the diagnostic device before transmitting the request message.

A battery system according to another aspect of the present disclosure includes a master ECU configured to transmit diagnostic data including diagnostic information to a diagnostic device when receiving a data request for the diagnostic information for vehicle diagnosis from the diagnostic device performing the vehicle diagnosis, and a plurality of slave ECUs configured to transmit the diagnostic data to the master ECU in response to a request message received from the master ECU, wherein the master ECU is configured to collect a plurality of diagnostic data from the plurality of slave ECUs in a multi-channel or single-channel communication method based on whether a total capacity of a required buffer corresponding to a data length of the diagnostic data and the number of the plurality of slave ECUs is less than a buffer size allocated for diagnosis.

The master ECU may gather contents of data in a controller area network (CAN) message received from each of the plurality of slave ECUs until receiving the diagnostic data from all of the plurality of slave ECUs and transmit the plurality of diagnostic data to the diagnostic device.

When it is determined that the total capacity is less than the buffer size, the master ECU may broadcast a request message to the plurality of slave ECUs and, simultaneously or with a time lag, collect the diagnostic information in the multi-channel communication method that receives the diagnostic data from each of the plurality of slave ECUs.

When it is determined that the total capacity is greater than or equal to the buffer size, the master ECU may collect the diagnostic information in the single-channel communication method that sequentially performs operations of transmitting a request message and receiving the diagnostic data, for each of the plurality of slave ECUs.

The master ECU may transmit a message to pend a response to the data request to the diagnostic device before transmitting the request message.

### [Advantageous Effects]

According to the present disclosure, the advantages of each communication method may be utilized by dynamically utilizing the single-channel communication method and the multi-channel communication method. That is, when the memory size is sufficient in response to the amount of diagnostic data, fast processing is possible by utilizing the multi-channel communication method. In addition, when the memory size is insufficient in response to the amount of diagnostic data, memory may be saved by utilizing the single-channel communication method.

According to the present disclosure, in the multiple connection method in which the master controller and the plurality of slave controllers are connected, a rapid response without delay is possible for most requests through dynamic channel configuration.

### [Description of the Drawings]

FIG. 1 is a block diagram schematically illustrating a vehicle according to an embodiment.
FIG. 2 is a flowchart illustrating a diagnostic information collecting method for vehicle diagnosis according to an embodiment.
FIG. 3 is a detailed flowchart illustrating an operation of collecting data in a single-channel communication method when the total capacity of a required buffer is determined to be equal to or greater than an allocated buffer size in step S102 shown in FIG. 2.
FIG. 4 is a detailed flowchart illustrating an operation of collecting data in a multi-channel communication method when the total capacity of the required buffer is determined to be less than the allocated buffer size in step S102 shown in FIG. 2.

### [Mode for Invention]

Hereinafter, referring to the drawings, the embodiment disclosed in this specification will be described in detail, but the same or similar reference numerals are given to the same or similar constituent elements, and redundant descriptions thereof will be omitted. The suffixes "module" and/or "- portion" for the constituent element used in the following description are given or mixed in consideration of only the ease of drafting the specification, and do not have meanings or functions distinguished from each other by themselves. In addition, in describing the embodiment disclosed in this specification, when it is determined that a detailed description of a related known technology may obscure the gist of the exemplary embodiment disclosed in this specification, the detailed description thereof will be omitted. In addition, the attached drawing is only for easy understanding of the exemplary embodiment disclosed in this specification, the technical idea disclosed in this specification is not limited by the attached drawing, and it should be understood to include all modifications, equivalents and substitutes included in the spirit and scope of the present disclosure.

The terms including ordinal numbers such as first, second, etc. may be used to describe various constituent elements, but the constituent elements are not limited by the terms. The terms are used only for the purpose of distinguishing one constituent element from another constituent element.

In the present application, the terms such as "comprise" or "have" are intended to designate the presence of a feature, number, step, operation, constituent element, part, or combinations thereof described in the specification, and it should be understood that the terms do not preclude in advance the possibility of the presence or addition of one or more other features or numbers, steps, operations, constituent elements, parts or combinations thereof.

Among the configurations according to an embodiment, in a configuration that controls another configuration under a specific control condition, program implemented as a set of instructions that embody a control algorithm necessary for controlling the other configuration may be installed. The control configuration may process input data and stored data according to the installed program to generate output data. The control configuration may include a nonvolatile memory that stores the program and a memory that stores data.

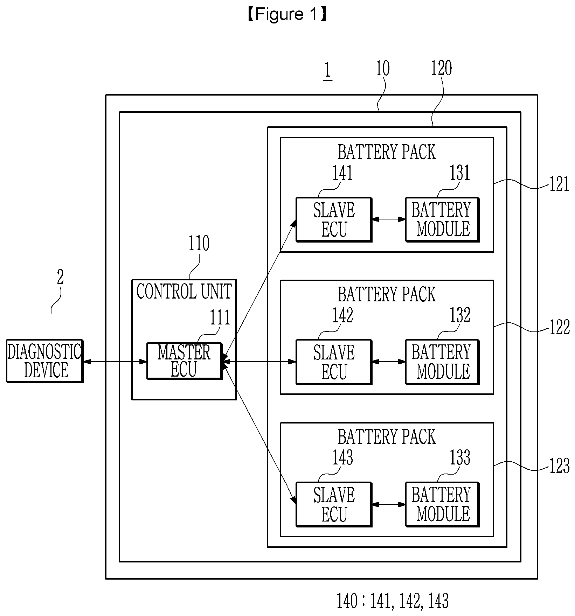

FIG. 1 is a block diagram schematically illustrating a vehicle according to an embodiment.

Referring to FIG. 1, a vehicle 1 may include a battery system 10.

The battery system 10 may include a control unit 110 and a vehicle battery 120.

The control unit 110 may include a master electronic control unit (ECU) 111. The control unit 110 may be a junction box that manages the vehicle battery 120 and diagnoses an operation of the vehicle battery 120.

The vehicle battery 120 may include a plurality of battery packs 121 to 123.

In an embodiment, the vehicle 1 may be a multi-pack environment including the plurality of battery packs 121 to 123.

Each (e.g., 121) of the plurality of battery packs 121 to 123 may include a corresponding battery module (e.g., 131) among a plurality of battery modules 131 to 133 and a corresponding slave ECU (e.g., 141) among a plurality of slave ECUs 141 to 144. The battery pack 121 may include a battery module 131 and a slave ECU 141. The battery pack 122 may include a battery module 132 and a slave ECU 142. The battery pack 123 may include a battery module 133 and a slave ECU 143.

Each of the plurality of battery modules 131 to 133 may include two or more battery cells connected in series, a plurality of battery cells in which two or more battery cells connected in parallel are connected in series, or two or more battery cells connected in parallel.

The master ECU 111 and the plurality of slave ECUs 141 to 143 may be connected to each other via a controller area network (CAN) bus to perform CAN communication. In the present specification, the master ECU 111 and the plurality of slave ECUs 141 to 143 may be vehicle ECUs.

The vehicle 1 may perform diagnosis, information collection, etc. on each component of the vehicle 1 through unified diagnostic service (UDS) communication based on a UDS protocol.

When describing the common operation and technical features of the plurality of slave ECUs 141 to 143, the plurality of slave ECUs 141 to 143 are collectively referred to as slave ECUs 140. In FIG. 1, the number of slave ECUs 140 is shown as 3, but this is for convenience of description, and the number of slave ECUs 140 is not limited thereto.

The master ECU 111 may be an upper control device of the slave ECU 140, and the slave ECU 140 may be a lower control device of the master ECU 111. The plurality of slave ECUs 141 to 143 may be a battery management system (BMS) that manages the vehicle battery 120.

Each of the plurality of slave ECUs 141 to 143 (e.g., 141) may measure and gather data from a corresponding battery module (e.g., 131) among the plurality of battery modules 131 to 133 and transmit the data to the master ECU 111. The master ECU 111 may communicate with the plurality of slave ECUs 141 to 143 to control the operation of the vehicle 1.

The vehicle 1 may be connected to a diagnostic device 2. The diagnostic device 2 may be an external device connected to the vehicle 1. The diagnostic device 2 may perform diagnosis on the vehicle 1. The diagnostic device 2 may transmit a data request (hereinafter, referred to as a "data request") for diagnostic information for the diagnosis of the vehicle 1 to the master ECU 111.

The master ECU 111 may collect data from the plurality of slave ECUs 141 to 143 at the request of the diagnostic device 2. The data collected by the master ECU 111 from the plurality of slave ECUs 141 to 143 may include diagnostic information according to the data request received from the diagnostic device 2.

In an embodiment, the vehicle 1 may explain a multiple connection communication situation including the master ECU 111 and the plurality of slave ECUs 141 to 143. After receiving the data request from the diagnostic device 2, the master ECU 111 may request, collect, and gather information from the plurality of slave ECUs 141 to 143, and send the information to the diagnostic device 2. In the multiple connection communication situation, a method in which the master ECU 111 communicates with the plurality of slave ECUs 141 to 143 may be multi-channel communication or single-channel communication.

Multi-channel communication may be a method in which the master ECU 111 simultaneously exchanges information with the plurality of slave ECUs 141 to 143, and the single-channel communication may be a method in which the master ECU 111 sequentially exchanges information with the plurality of slave ECUs 141 to 143, such as exchanging information with one of the plurality of slave ECUs 141 to 143, and then exchanging information with the other of the plurality of slave ECUs 141 to 143.

In an embodiment, the master ECU 111 may dynamically utilize multi-channel communication or single-channel communication according to the amount of data and the size of memory (e.g., buffer) in the multiple connection situation.

Multi-channel communication has the advantage of a fast communication speed as it is quickly processed without a response pending situation, but has a disadvantage of requiring a large memory size as a memory buffer needs to be allocated for each channel. In addition, single-channel communication saves memory because information is exchanged using a single buffer, but has the disadvantage in that it is difficult to process quickly as a response pending situation occurs when all information is gathered.

In an embodiment, both the advantages of multi-channel and single-channel may be utilized by dynamically utilizing multi-channel and single-channel such that when memory is sufficient, multi-channel communication may operate, and if not, single-channel communication may operate.

Upon receiving the data request from the diagnostic device 2, the master ECU 111 may collect diagnostic information in a multi-channel communication or single-channel communication method as a communication method with the plurality of slave ECUs 141 to 143 based on whether the total capacity of a required buffer according to the data request is less than a buffer size allocated for diagnosis. The total capacity of the required buffer may be the total size of the buffer required by the master ECU 111 to store data received from the plurality of slave ECUs 141 to 143.

The master ECU 111 may transmit a request message to the plurality of slave ECUs 141 to 143 in the multi-channel communication or single-channel communication method based on the total capacity of the required buffer and the allocated buffer size and collect a plurality of diagnostic data from the plurality of slave ECUs 141 to 143.

The master ECU 111 may determine the total capacity of the required buffer in response to the data length of diagnostic data (hereinafter, referred to as "diagnostic data") including the diagnostic information and the number of the plurality of slave ECUs 141 to 143.

A plurality of diagnostic items that may be requested by the diagnostic device 2 and a data length of diagnostic data corresponding to each of the plurality of diagnostic items may be previously stored in the master ECU 111. The data request received by the master ECU 111 from the diagnostic device 2 may include a diagnostic item for the vehicle 1. The master ECU 111 may determine the data length of diagnostic data corresponding to the diagnostic item included in the data request among the plurality of diagnostic items based on data lengths of the previously stored diagnostic data.

In an embodiment, the master ECU 111 may determine the product of the data length of the diagnostic data and the number of the plurality of slave ECUs 141 to 143 as the total capacity of the required buffer. For example, when the number of slave ECUs 140 is 12, and the data length of the diagnostic data is 4095 bytes, the master ECU 111 may determine the total capacity of the required buffer as 4095 (Byte)*12=48 (Kbyte). Hereinafter, the total capacity of the required buffer is described as being the product of the data length of the diagnostic data and the number of the plurality of slave ECUs 141 to 143, but the disclosure is not limited thereto, and the master ECU 111 may determine the total capacity of the required buffer based on the data length of the diagnostic data, the number of the plurality of slave ECUs 141 to 143, etc.

In addition, the master ECU 111 may determine the buffer size allocated for the diagnosis of the vehicle battery 120.

When it is determined that the total capacity of the required buffer is greater than or equal to the allocated buffer size, the master ECU 111 may collect diagnostic information from the plurality of slave ECUs 141 to 143 in the single-channel communication method. When it is determined that the total capacity of the required buffer is greater than or equal to the allocated buffer size, the master ECU 111 may sequentially perform operations of transmitting a request message and receiving diagnostic data for each of the plurality of slave ECUs 141 to 143.

A timeout time for request transmission and response reception between the diagnostic device 2 and the master ECU 111 and a timeout time for request transmission and response reception between the master ECU 111 and the slave ECU 140 may be previously determined as initial information. Hereinafter, for convenience of description, the timeout time for request transmission and response reception between the diagnostic device 2 and the master ECU 111 is To1, and the timeout time for request transmission and response reception between the master ECU 111 and the slave ECU 140 is To2. In addition, it may be assumed that t_res is a time taken to perform once an operation of receiving a response to a request from a time when the master ECU 111 transmits the request to the slave ECU 140, t_res is within To2 time, and To1 is greater than t_res and less than 2*t_res.

Assuming that the number of slave ECUs 140 is n (n is a natural number of 2 or more), when using the single-channel communication method, the master ECU 111 needs to perform an operation of transmitting a request to and receiving a response from the slave ECU 140 n times.

When the operation of transmitting the request to and receiving the response from the slave ECU 140 is performed n times, because n*t_res time is necessary, it is difficult for the master ECU 111 to respond to the data request to the diagnostic device 2 within To1 time. Therefore, when using the single-channel communication method, the master ECU 111 needs to pend a response to the data request to the diagnostic device 2 until receiving the diagnostic data from each of the plurality of slave ECUs 141 to 143. Therefore, when it is determined that the total capacity of the required buffer is greater than or equal to the allocated buffer size, the master ECU 111 may transmit a response pending message before transmitting the request message to the plurality of slave ECUs 141 to 143. The response pending message may be a message of pending the response to the data request to the diagnostic device 2 until a diagnosis message is received from all of the plurality of slave ECUs 141 to 143. For example, the response pending message may be a response pending message in which a negative response code (NRC) is 0x78 in the UDS protocol.

When it is determined that the total capacity of the required buffer is less than the allocated buffer size, the master ECU 111 may collect the diagnostic information from the plurality of slave ECUs 141 to 143 in the multi-channel communication method. When it is determined that the total capacity of the required buffer is less than the allocated buffer size, the master ECU 111 may broadcast the request message to the plurality of slave ECUs 141 to 143, and simultaneously or with a time lag, receive the diagnostic data from each of the plurality of slave ECUs 141 to 143.

Even if the number of slave ECUs 140 is n, when using the multi-channel communication method, the master ECU 111 may perform the operation of transmitting the request to and receiving the response from the slave ECU 140 once.

When the operation of transmitting the request to and receiving the response from the slave ECU 140 is performed once, because t_res time is necessary, the master ECU 111 may respond to the data request to the diagnostic device 2 within To1 time. Therefore, when using the multi-channel communication method, the master ECU 111 does not need to transmit the response pending message to the diagnostic device 2.

In the present specification, To1 is greater than t_res and less than 2*t_res, but this is for convenience of description and the disclosure is not limited thereto. In an embodiment, To1 may be less than t_res, and in this case, the master ECU 111 may transmit the response pending message to the diagnostic device 2 even when the multi-channel communication method is used to prevent a timeout of the diagnostic device 2.

The master ECU 111 may gather data received from each of the plurality of slave ECUs 141 to 143 and store the data in a buffer, and transmit the diagnostic data to the diagnostic device 2. The master ECU 111 may gather contents of data in a CAN message received from each of the plurality of slave ECUs 141 to 143 until receiving the diagnostic data from all of the plurality of slave ECUs 141 to 143. The content of the data among the CAN message received by the master ECU 111 from each of the plurality of slave ECUs 141 to 143 may include diagnostic data corresponding to the diagnostic information requested from the diagnostic device 2. The master ECU 111 may store the data received from the plurality of slave ECUs 141 to 143 in the buffer.

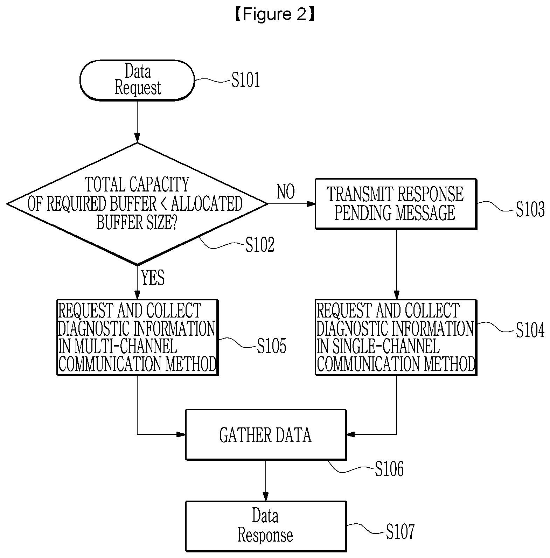

FIG. 2 is a flowchart illustrating a diagnostic information collecting method for vehicle diagnosis according to an embodiment.

Hereinafter, descriptions of the diagnostic device 2, the master ECU 111, and the slave ECU 140 that are redundant with the descriptions above may be omitted.

Referring to FIG. 2, the master ECU 111 may receive a data request for diagnostic information from the diagnostic device 2 (S101).

The master ECU 111 may determine whether the total capacity of a required buffer is less than an allocated buffer size (S102).

In step S102, when the total capacity of the required buffer is determined to be greater than or equal to the allocated buffer size (No in S102), the master ECU 111 may transmit a response pending message to the diagnostic device 2 (S103).

Following step S103, the master ECU 111 may request and collect diagnostic information from the plurality of slave ECUs 141 to 143 in a single-channel communication method (S104).

In step S102, when it is determined that the total capacity of the buffer required for the diagnostic device 2 is less than the allocated buffer size (Yes in S102), the master ECU 111 may request and collect the diagnostic information from the plurality of slave ECUs 141 to 143 in a multi-channel communication method (S105).

Following step S104 or S105, the master ECU 111 may gather data received from the plurality of slave ECUs 141 to 143 (S106). The data gathered by the master ECU 111 may include diagnostic data received from each of the plurality of slave ECUs 141 to 143.

Following step S106, the master ECU 111 may transmit a plurality of diagnostic data received from the plurality of slave ECUs 141 to 143 to the diagnostic device 2 in response to the data request in step S101 (S107).

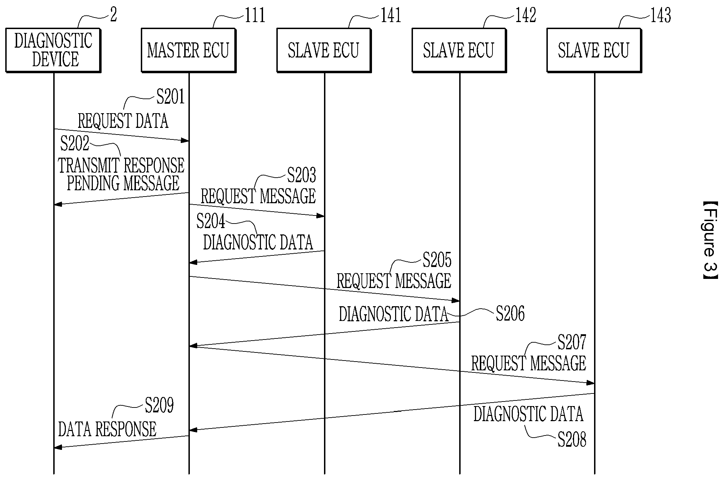

FIG. 3 is a detailed flowchart illustrating an operation of collecting data in a single-channel communication method when the total capacity of a required buffer is determined to be equal to or greater than an allocated buffer size in step S102 shown in FIG. 2.

Hereinafter, descriptions of the diagnostic device 2, the master ECU 111, and the slave ECU 140 that are redundant with the descriptions above may be omitted.

Referring to FIG. 3, the diagnostic device 2 may request data on diagnostic information from the master ECU 111 (S201). Step S201 of FIG. 3 may correspond to step S101 of FIG. 2.

When it is determined that the total capacity of the required buffer is equal to or greater than the allocated buffer size, the master ECU 111 may transmit a response pending message to the diagnostic device 2 (S202). Step S202 of FIG. 3 may correspond to step S103 of FIG. 2.

In the single-channel communication method, the master ECU 111 may sequentially perform operations of transmitting a request message to each of the plurality of slave ECUs 141 to 143, and receiving diagnostic data from each of the plurality of slave ECUs 141 to 143.

The master ECU 111 may transmit a request message to the slave ECU 141 (S203).

The master ECU 111 may receive diagnostic data from the slave ECU 141 (S204). Here, the diagnostic data may be response data to the request message received by the slave ECU 141 from the master ECU 111 in step S203.

The master ECU 111 may transmit a request message to the slave ECU 142 (S205).

The master ECU 111 may receive diagnostic data from the slave ECU 142 (S206). Here, the diagnostic data may be response data to the request message received by the slave ECU 142 from the master ECU 111 in step S205.

The master ECU 111 may transmit a request message to the slave ECU 143 (S207).

The master ECU 111 may receive diagnostic data from the slave ECU 143 (S208). Here, the diagnostic data may be response data to the request message received by the slave ECU 143 from the master ECU 111 in step S207.

Steps S203 to S208 of FIG. 3 may be included in step S104 of FIG. 2.

When the diagnostic data is received from all of the plurality of slave ECUs 141 to 143, the master ECU 111 may gather a plurality of diagnostic data received from the plurality of slave ECUs 141 to 143 and transmit the plurality of diagnostic data to the diagnostic device 2 (S209). Step S209 of FIG. 3 may correspond to step S207 of FIG. 2.

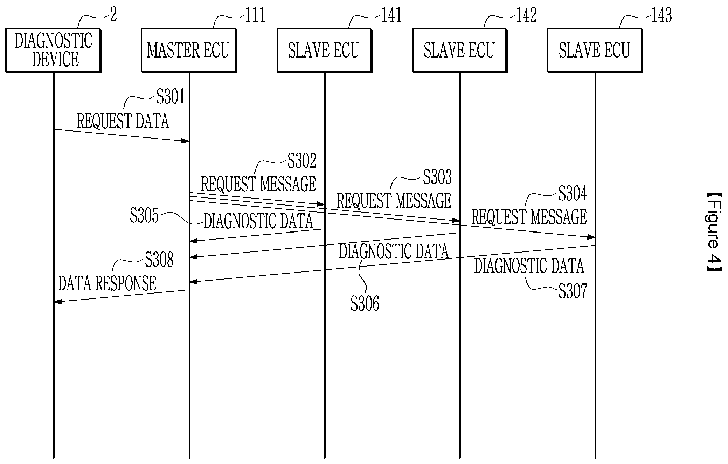

FIG. 4 is a detailed flowchart illustrating an operation of collecting data in a multi-channel communication method when the total capacity of the required buffer is determined to be less than the allocated buffer size in step S102 shown in FIG. 2.

Hereinafter, descriptions of the diagnostic device 2, the master ECU 111, and the slave ECU 140 that are redundant with the descriptions above may be omitted.

Referring to FIG. 4, the diagnostic device 2 may request for data on diagnostic information from the master ECU 111 (S301). Step S301 of FIG. 34 may correspond to step S101 of FIG. 2.

When it is determined that the total capacity of the required buffer is less than the allocated buffer size, the master ECU 111 may transmit a request message to the plurality of slave ECUs 141 to 143 in the multi-channel communication method and, simultaneously or with a time lag, receive diagnostic data from each of the plurality of slave ECUs 141 to 143. The master ECU 111 may transmit the request message to all of the plurality of slave ECUs 141 to 143 (S302, S303, and S304). In the multi-channel communication method, a method in which the master ECU 111 transmits the request message to all of the plurality of slave ECUs 141 to143 may be a broadcast method or a method of sequentially transmitting the request message with a minimum time difference.

The master ECU 111 may receive the diagnostic data from the slave ECU 141 (S305). Here, the diagnostic data may be data that the slave ECU 141 responds to the request message received from the master ECU 111 in step S302.

The master ECU 111 may receive the diagnostic data from the slave ECU 142 (S306). Here, the diagnostic data may be data that the slave ECU 142 responds to the request message received from the master ECU 111 in step S303.

The master ECU 111 may receive the diagnostic data from the slave ECU 143 (S307). Here, the diagnostic data may be data that the slave ECU 143 responds to the request message received from the master ECU 111 in step S303.

FIG. 4 shows that there is a difference between times when the master ECU 111 receives the diagnostic data from the plurality of slave ECUs 141 to 143, in steps S305 to S307, but this is for convenience of description and the disclosure is not limited thereto. The master ECU 111 may simultaneously receive the diagnostic data from the plurality of slave ECUs 141 to 143, or may sequentially receive the diagnostic data with a small time difference.

Steps S302 to S307 of FIG. 4 may be included in step S105 of FIG. 2.

When receiving the diagnostic data from all of the plurality of slave ECUs 141 to 143, the master ECU 111 may gather a plurality of diagnostic data received from the plurality of slave ECUs 141 to 143 and transmit the plurality of diagnostic data to the diagnostic device 2 (S308). Step S308 of FIG. 4 may correspond to step S107 of FIG. 2.

The description above relates to the dynamic communication channel utilization between the master ECU 111 and the plurality of slave ECUs 141 to 143 in a multiple connection situation between the master ECU 111 and the plurality of slave ECUs 141 to 143, but this is for convenience of description and the disclosure is not limited thereto. The description of the dynamic communication channel utilization between the master ECU 111 and the plurality of slave ECUs 141 to 143 in an embodiment is not limited to an electronic control device of a vehicle, but may be applied to the dynamic communication channel utilization between an upper (master) controller (e.g., master BMS) and a plurality of lower (slave) controllers (e.g., slave BMS).

Although the embodiments of the present disclosure have been described in detail above, the scope of the present disclosure is not limited thereto, and various modifications and improvements made by those skilled in the art in the field to which the present disclosure pertains are also within the scope of the present disclosure.

## Claims

1. A method in which a master electronic control unit (ECU) collects diagnostic information for vehicle diagnosis from a plurality of slave ECUs, the method comprising:
receiving a data request for the diagnostic information from a diagnostic device;
determining whether a total capacity of a required buffer corresponding to a data length of diagnostic data including the diagnostic information and the number of the plurality of slave ECUs is less than a buffer size allocated for diagnosis;
collecting a plurality of diagnostic data from the plurality of slave ECUs in a multi-channel or single-channel communication method based on whether the total capacity is less than the buffer size; and
transmitting the plurality of diagnostic data to the diagnostic device.

2. The method of claim 1, wherein:
the transmitting of the plurality of diagnostic data to the diagnostic device includes
gathering contents of data in a controller area network (CAN) message received from each of the plurality of slave ECUs until receiving the diagnostic data from all of the plurality of slave ECUs.

3. The method of claim 1, wherein:
when it is determined that the total capacity is less than the buffer size,
the collecting of the plurality of diagnostic data from the plurality of slave ECUs in the multi-channel or single-channel communication method includes
broadcasting a request message to the plurality of slave ECUs and, simultaneously or with a time lag, collecting the diagnostic information in the multi-channel communication method that receives the diagnostic data from each of the plurality of slave ECUs.

4. The method of claim 1, wherein:
when it is determined that the total capacity is greater than or equal to the buffer size,
the collecting of the plurality of diagnostic data from the plurality of slave ECUs in the multi-channel or single-channel communication method includes
collecting the diagnostic information in the single-channel communication method that sequentially performs operations of transmitting a request message and receiving the diagnostic data, for each of the plurality of slave ECUs.

5. The method of claim 4, further comprising:
transmitting a message to pend a response to the data request to the diagnostic device before transmitting the request message.

6. A battery system comprising:
a master electronic control unit (ECU) configured to transmit diagnostic data including diagnostic information to a diagnostic device when receiving a data request for the diagnostic information for vehicle diagnosis from the diagnostic device performing the vehicle diagnosis; and
a plurality of slave ECUs configured to transmit the diagnostic data to the master ECU in response to a request message received from the master ECU,
wherein the master ECU is configured to
collect a plurality of diagnostic data from the plurality of slave ECUs in a multi-channel or single-channel communication method based on whether a total capacity of a required buffer corresponding to a data length of the diagnostic data and the number of the plurality of slave ECUs is less than a buffer size allocated for diagnosis.

7. The battery system of claim 6, wherein:
the master ECU is configured to
gather contents of data in a controller area network (CAN) message received from each of the plurality of slave ECUs until receiving the diagnostic data from all of the plurality of slave ECUs and transmit the plurality of diagnostic data to the diagnostic device.

8. The battery system of claim 6, wherein:
when it is determined that the total capacity is less than the buffer size,
the master ECU is configured to
broadcast a request message to the plurality of slave ECUs and, simultaneously or with a time lag, collect the diagnostic information in the multi-channel communication method that receives the diagnostic data from each of the plurality of slave ECUs.

9. The battery system of claim 6, wherein:
when it is determined that the total capacity is greater than or equal to the buffer size,
the master ECU is configured to
collect the diagnostic information in the single-channel communication method that sequentially performs operations of transmitting a request message and receiving the diagnostic data, for each of the plurality of slave ECUs.

10. The battery system of claim 9, wherein:
the master ECU is configured to
transmit a message to pend a response to the data request to the diagnostic device before transmitting the request message.
